# EUROPEAN PATENT APPLICATION

(11) **EP 1 940 184 A1**
(43) Date of publication of application: **02.07.2008**
(21) Application number: 06824442.5
(22) Date of filing: 10.10.2006
(51) Int. Cl.: H04Q 7/22

(54) **METHOD FOR MANAGING ADDITIONAL SERVICES IN MOBILE TELECOMMUNICATIONS NETWORKS**

(71) Applicant: Obshchestvo S Ogranichennoj Otvetstvennost'yu Naucho, St.Petersburg 191144 (RU)
(72) Inventor: MOTSAREV, Anton Viktorovich, St.Petersburg 190121 (RU); IVANOV, Il'ya Anatol'evich, St.Petersburg 195299 (RU); ERMILOV, Sergej Nikolaevich, St.Petersburg 191123 (RU)
(74) Representative: Schneider, Henry
(86) International application number: PCT/RU2006/000526
(87) International publication number: WO 2008/044959

(57) **Abstract**

The invention is in the field of mobile phone communications and can be used by clients of a mobile network for receiving additional services.

According to the inventive method for controlling additional services in mobile communication networks with support in mobile terminals containing client identification modules, additional services being received through additional services units, wherein objects are loaded into said client identification modules of the mobile terminals in the form of scripts for controlling additional services and said objects are controlled via a wireless interface, the requests for generation of objects corresponding to the additional service being created by the client are sent from a mobile terminal through the mobile network to the additional services unit, the request for the object generation containing data in the form of a software toolkit for executing the objects, which is used in said additional services unit for generating the requested object, corresponding to the new additional service desired by the client, whereupon the requested object is sent through the mobile communication network to the client identification module of the mobile terminal; after providing the additional service to the client the corresponding object is deleted from the client identification module in the absence of the client's command to preserve this object in the client identification module.

The inventive method allows controlling the objects, including the creation of new objects and modification of existing objects, by means of mobile terminals.

## Description

### Technical field

The invention relates to mobile phone communications and can be used by clients of a mobile network for receiving additional services.

### Background art

The objects that are used for controlling additional services are loaded via a wireless interface from an additional services unit and executed at the client identification module. The objects are in the form of scripts for controlling additional services. A script can include a menu, input of text, request of another object, sending of a short message, a telephone call at a specified number, etc.

A known method for transferring one or more files of software tools to the second unit within a network system containing the first unit connected with the second unit, consists in the following stages: invocation of a menu in the first unit containing the list of identifiers of software tools files, where each identifier of a software tools file identifies corresponding file among the multitude of software tools files; transfer of the list of identifiers of software tools files from the first unit to the second unit; analysis of each identifier of a software tools file by the second node and the generation of a response, which includes for each identifier of a software tools file an indication that states whether the corresponding file from the multitude of software tools files is desirable or not; transfer of the response from the second unit to the first unit; analysis of the response in the first node and invocation of those files from the multitude of software tools files which correspond to the identifiers of software tools files marked as desirable by the second node; and the transfer of the invoked software tools files from the first node to the second node, RU 2155372 C2.

This method can be used for downloading software tools files within a communication system; however, it is very difficult to load objects via a wireless interface to a client identification module by means of this method.

Another known method for controlling additional services in mobile communication systems operating in the menu mode with support in the end terminals, wherein additional services are available through additional services units, and the objects are loaded into mobile terminals containing client identification modules; the objects are controlled, modified or executed via a wireless interface of the mobile communication system; the objects comprise programs, functions and/or data that maintain the communication between the client and the additional services unit and the servicing of available additional services; the objects are loaded into the mobile station via a wireless interface; the loading and/or modification of objects is made in special loading stations available at sellers, service providers, etc.; a menu for the additional services unit is created with the help of the objects and displayed on the screen of the mobile station entirely or part by part; the menu on the screen of the mobile station is changed according to the actions performed by the additional services unit, adjusted and/or updated upon loading of a new object; the objects are placed into the memory of the object center of the mobile communication system and from there they are invoked and loaded into the mobile end terminal, RU 2196393 C2.

This method is taken as a prototype of the present invention. The method provides controlling of additional services in mobile communication networks in the menu mode with support in the end terminals (mobile terminals), wherein additional services are available through additional services units. The objects are loaded into mobile terminals in the form of programs (scripts), functions (procedures that return values), etc.

The disadvantage of the prototype is in that the objects are controlled (generated, modified) in the object center, without participation of the client. The client can only request a ready-made object generated in the object center. This makes impossible creating and receiving by the client of objects exactly as desired; the client has no choice but to be content only with the services sent to him/her from the object center through the network or provided by the service provider in the service center from the number of available services created without participation of the client. Besides, due to limited memory size of the client identification module the object center has to periodically update objects located in the memory of the client identification module of the mobile terminals without participation of the client in order to introduce new additional services.

### Summary of the invention

It is an object of the present invention to allow controlling the objects, including the creation of new objects and modification of existing objects, by means of mobile terminals.

According to the inventive method for controlling additional services in mobile communication networks with support in mobile terminals containing client identification modules, additional services being received through additional services units, wherein objects are loaded into said client identification modules of the mobile terminals in the form of scripts for controlling additional services and said objects are controlled via a wireless interface, the requests for generation of objects corresponding to the additional service being created by the client are sent from a mobile terminal through the mobile network to the additional services unit, the request for the object generation containing data in the form of a software toolkit for executing the objects, which is used in said additional services unit for generating the requested object, corresponding to the new additional service desired by the client, whereupon the requested object is sent through the mobile communication network to the client identification module of the mobile terminal; after providing the additional service to the client the corresponding object is deleted from the client identification module in the absence of the client's command to preserve this object in the client identification module.

The applicant hasn't found any source of information containing data on engineering solutions identical to the present invention. In applicant's opinion, this enables to conclude that the invention conforms to the criterion "Novelty" (N).

The novel features of the present invention provide an important engineering result which consists in that the client himself\herself can create an object corresponding to the desired additional service. While according to the prototype and other known methods the objects remain static (are stored in the depository or in the memory of the client identification module) after being created by an operator or a service provider, in the inventive method the objects are in constant dynamics: generated upon demand of the client according to his requests and destroyed after providing the service (according to the default workflow, if the client issued no command to preserve the object).

The applicant hasn't found any source of information containing data on the influence of the inventive novel features on the technical result produced through the realization of said features. In applicant's opinion, this enables to conclude that the present engineering solution conforms to the criterion "Inventive Step" (IS).

### Brief description of the drawings

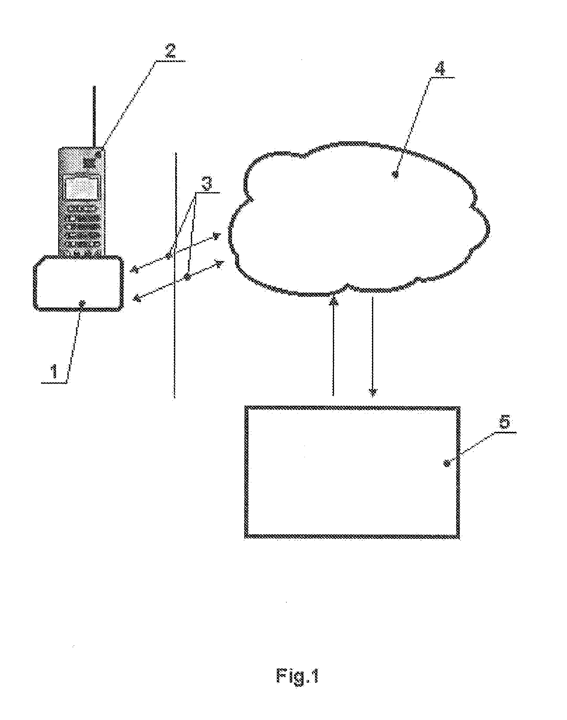

This invention is further explained, by way of example, with reference to the accompanying drawing, which shows the functional schemes of embodiment of the inventive method.

### Preferred embodiment

The inventive method is embodied in the following way.

In this particular embodiment a software program in JAVA language is recorded to the client identification module 1 contained in the mobile terminal 2 using the 3GPPTS 03.19 specification, which constitutes a software interface for client identification modules with JAVA support. This allows embodiment of the inventive method independently of the manufacturer of the module. Loading and execution of the objects is performed by using the functional capabilities of the software toolkit of the client identification module according to the 3GPP TS 11.14 specification.

Secure (encoded) transfer of confidential data can be used if needed, using the secure mechanism for the software toolkit of the client identification module (3GPP TS 03.48).

The client sends a request to the additional services unit 5 from the mobile terminal 2 via a wireless interface 3 through the mobile network 4. The request contains data necessary for the unit 5 for generating the object requested by the client, corresponding to the additional service being created by the client. After generation of the requested object in the unit 5 the object is sent through the mobile network 4 and the wireless interface 3 to the client identification module 1 of the mobile terminal 2. After the additional service is provided to the client the corresponding object is automatically deleted in order to free the memory of the module 1 in the absence of the client's command to preserve this object in the module 1. This allows providing unlimited amount of additional services within the same operator network, where the client has possibility to receive required services according to a preferred scenario.

The mechanism for transferring the objects can be embodied as the transport system provided by the Short Message Service (SMS), the Unstructured Supplementary Services Data (USSD) or the General Packet Radio Service (GPRS). The transport system is chosen according to the capabilities of the mobile terminal and with the purpose of optimizing the utilization of the wireless interface.

The service can be received by means of a transport system different from the transport system used for requesting the service, for example, by means of the Multimedia Messaging Service (MMS).

The operator or a service provider records into the client identification module a number of permanent objects that provide access to the additional services unit.

### Industrial applicability

The inventive method for controlling additional services in mobile communication networks can be realized by means of known technologies and hardware of mobile communications, which, in applicant's opinion, enables to conclude that the invention conforms to the criterion "Industrial Applicability" (IA).

## Claims

1. A method for controlling additional services in mobile communication networks with support in mobile terminals containing client identification modules, additional services being received through additional services units, wherein objects are loaded into said client identification modules of the mobile terminals in the form of scripts for controlling additional services and said objects are controlled via a wireless interface, **characterized in that** the requests for generation of objects corresponding to the additional service being created by the client are sent from a mobile terminal through the mobile network to the additional services unit, the request for the object generation containing data in the form of a software toolkit for executing the objects, which is used in said additional services unit for generating the requested object, corresponding to the new additional service desired by the client, whereupon the requested object is sent through the mobile communication network to the client identification module of the mobile terminal.

2. A method as claimed in claim 1, **characterized in that** after providing the additional service to the client the corresponding object is deleted from the client identification module in the absence of the client's command to preserve this object in the client identification module.
